# EUROPEAN PATENT APPLICATION

(11) **EP 2 672 098 A1**
(43) Date of publication of application: **11.12.2013**
(21) Application number: 12741575.0
(22) Date of filing: 31.01.2012
(51) Int. Cl.: F02D 45/00, F02D 41/40

(54) **FUEL INJECTION CONTROL DEVICE**

(30) Priority: 03.02.2011 JP 2011021615
(71) Applicant: KABUSHIKI KAISHA TOYOTA JIDOSHOKKI, Kariya-shi, Aichi 448-8671 (JP); TOYOTA JIDOSHA KABUSHIKI KAISHA, Toyota-shi, Aichi-ken, 471-8571 (JP)
(72) Inventor: YAMAMURA, Yoshiya, Kariya-shi, Aichi 448-8671 (JP); NARITA, Yuji, Kariya-shi, Aichi 448-8671 (JP); ITO, Yoshiyasu, Toyota-shi, Aichi-ken 471-8571 (JP)
(74) Representative: TBK
(86) International application number: PCT/JP2012/052101
(87) International publication number: WO 2012/105540

(57) **Abstract**

When the rotational speed of the diesel engine 1 exceeds the reference rotational speed, the fuel injection amount calculation processing is not completed at the first crank angle. Thus, the fuel injection amount calculation processing is interrupted and the first tasks of the first calculation processing are performed at the first crank angle. The remaining calculation processing of the fuel injection amount calculation processing is performed following completion of the first tasks, and then the second tasks of the first calculation processing is performed. The second calculation processing is started following completion of the second tasks at the second crank angle.

## Description

### Technical Field

The present invention relates to a fuel injection control apparatus for a diesel engine.

### Background Art

In recent years, common rail type diesel engines have gained prominence among diesel engines. In a common rail type diesel engine, split injection and so on can be performed easily by having a fuel injection control apparatus control energization time (valve opening time) of a fuel injection valve (injector), and therefore injection can be performed with a high degree of freedom. Incidentally, the fuel injection control apparatus typically starts to calculate fuel injection amounts for respective cylinders on the basis of a predetermined crank angle. To ensure that fuel is injected into the respective cylinders reliably, calculation of the fuel injection amounts must be completed at a timing before the start of fuel injection when injection is not impaired, or in other words before a calculation completion limit angle.

Typically, an interval between the calculation start timing of the fuel injection amount and an injection energization start timing of the fuel injection valve is preferably as short as possible. The reason for this is that as time elapses, variations occur in information relating to operating conditions (engine rotational speed, load, pressure in a common rail, and so on) used in the calculation, and therefore control can be executed with a higher degree of precision as the aforementioned interval decreases.
Further, processing requiring calculation by a fuel injection control apparatus includes processing for calculating correction values to respond to variations among the injectors disposed in the respective cylinders, processing relating to an after-injection in which fuel is injected into the cylinders following a main injection, and so on. These processes typically use the calculated fuel injection amounts as a parameter, and are therefore performed as a single process in which calculation is started after fuel injection amount calculation using a predetermined crank angle as a reference.

However, in a case where the number of cylinders in the engine is increased or the rotational speed of the engine increases, fuel injection amount calculation may not be completed by the crank angle at which the processing using the fuel injection amount calculation results is started. Particularly when the number of cylinders is increased, the crank angle that can be used to calculate the fuel injection amounts narrows such that the actual amount of time that can be used for the calculation becomes extremely short. For example, when the crank angle of a single cycle is divided by the number of cylinders, a crank angle of 180° is obtained with a four-cylinder diesel engine, but with an eight-cylinder diesel engine, the crank angle is 90°, and therefore the amount of time that can be used for the calculation is halved.
Furthermore, in an engine employing a pilot injection, in which fuel is injected before the main injection in order to reduce NOx and so on, the crank angle at the timing that starts the processing using the fuel injection amount calculation results is set to be more advanced, and therefore the actual amount of time that can be used for the calculation is also shortened in cases where this type of fuel injection control is performed.

As described in Patent Document 1, therefore, in a case where the fuel injection amount calculation time is short such that calculation of the fuel injection amounts is not completed by the crank angle at the timing that starts the processing using the fuel injection amount calculation results, the processing in which calculation is started using the crank angle as a reference is executed as interruption processing by interrupting calculation of the fuel injection amounts. In the interruption processing, previous fuel injection amounts injected into identical cylinders are calculated as current fuel injection amounts.

[Patent Document 1] JP 6249052 A1

### Summary of the Invention

However, when the interruption processing described above is implemented, the previously calculated fuel injection amounts are calculated as the current fuel injection amounts, and therefore precision of the fuel injection amount control deteriorates. Further, by taking measures such as simplifying the content of the calculation processing as a method of suppressing the frequency of the interruption processing or using an apparatus having a high processing speed as the fuel injection control apparatus, the processing can be completed by the required calculation timing even when the calculation time is short, but in this case, either the precision of the fuel injection amount control deteriorates or a new problem arises in cost increases of the control apparatus.

An object of the present invention is to provide a fuel injection control apparatus with which precision of fuel injection amount control can be maintained even during high rotational speed without the use of a processing apparatus having a high processing speed.

The present invention provides a fuel injection control apparatus for a diesel engine having a plurality of cylinders, which calculates fuel injection amounts for the respective cylinders on the basis of a crank angle, the fuel injection control apparatus comprising a control apparatus having a calculation unit that performs: fuel injection amount calculation processing; and other calculation processing in which calculation is started from a preset crank angle following the start of the fuel injection amount calculation processing, the other calculation processing including: first tasks in which calculation must be started at the preset crank angle; and second tasks requiring a calculation result of the fuel injection amount calculation processing, wherein, when calculation of the fuel injection amounts is not completed by the preset crank angle, the calculation unit implements interruption control to interrupt the fuel injection amount calculation processing at the preset crank angle in order to perform the first tasks, perform remaining calculation processing of the fuel injection amount calculation processing following completion of the first tasks, and then perform the second tasks.

The other calculation processing conventionally performed as a single process in which the fuel injection amount calculation result is used as a calculation parameter and calculation is started at a preset crank angle is divided into the first tasks, in which calculation must be started at the preset crank angle and which therefore has a higher order of precedence than the fuel injection amount calculation, and the second tasks, in which calculation is performed following completion of the fuel injection amount calculation and which therefore has a lower order of precedence than the fuel injection amount calculation. Hence, even when the fuel injection amount calculation processing is not complete at a start point of the other calculation processing, the fuel injection amount calculation processing can be interrupted to perform the first tasks, the remaining calculation processing of the fuel injection amount calculation processing can be performed following completion of the first tasks, and then the second tasks requiring the fuel injection amount calculation result can be performed. As a result, the precision of the fuel injection amount calculation processing and the other calculation processing can be improved.

According to the present invention, the other calculation processing performed as a single process in which the fuel injection amount calculation result is used as a calculation parameter and calculation is started at the preset crank angle is divided into the first tasks and the second tasks. Hence, even when the fuel injection amount calculation processing is not complete at the start point of the other calculation processing, the interruption processing is implemented such that the fuel injection amount calculation processing is interrupted to start the first tasks, the remaining calculation processing of the fuel injection amount calculation processing is performed following completion of the first tasks, and then the second tasks requiring the fuel injection amount calculation results is performed. As a result, the other calculation processing can be performed using the fuel injection amount calculation result, and therefore highly precise fuel injection amounts can be calculated even at high rotational speeds.

### Brief Description of the Drawings

Fig. 1 is a schematic constitutional diagram of a diesel engine including a fuel injection control apparatus according to an embodiment of the present invention;
Fig. 2 is a view illustrating the constitution of an engine rotation sensor provided in the fuel injection control apparatus according to this embodiment;
Fig. 3 is a view illustrating in detail calculation processing performed by a calculation unit in the fuel injection control apparatus according to this embodiment;
Fig. 4 is a view illustrating in detail calculation processing performed by a calculation unit in the fuel injection control apparatus according to this embodiment;
Fig. 5 is a view illustrating in detail calculation processing performed by a calculation unit in the fuel injection control apparatus according to this embodiment;
Fig. 6 is a view illustrating in detail calculation processing performed by a calculation unit in the fuel injection control apparatus according to this embodiment; and
Fig. 7 is a view illustrating in detail calculation processing performed by a calculation unit in the fuel injection control apparatus according to this embodiment.

### Description of the Preferred Embodiments

An embodiment of the present invention will be described below on the basis of the attached drawings.

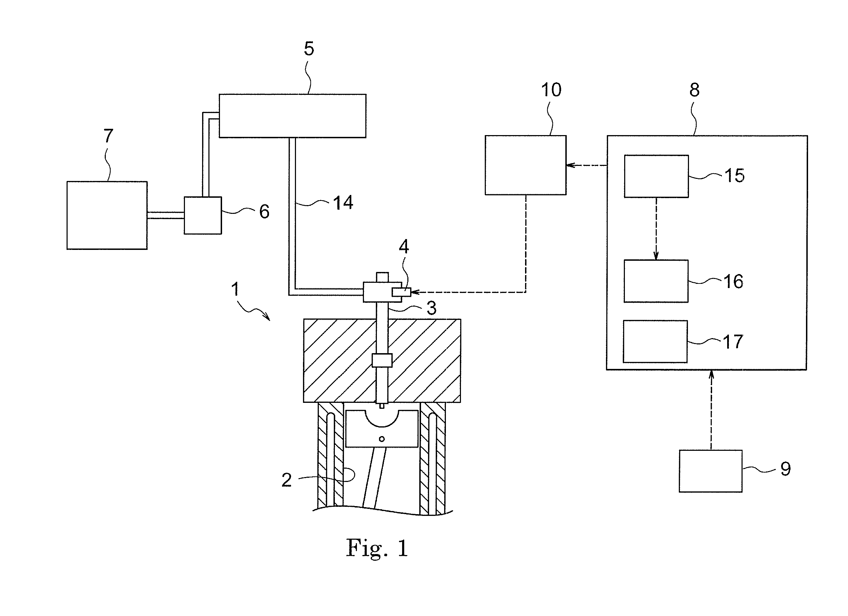

Fig. 1 shows the constitution of a diesel engine including a fuel injection control apparatus according to an embodiment of the present invention. A diesel engine 1 is a V type eight-cylinder common rail diesel engine. Each cylinder 2 (only one cylinder is shown in Fig. 1) is provided with an injector 3 for injecting fuel into the cylinder. Each injector 3 is provided with a solenoid valve 4 for ON/OFF control of the fuel injection.

The injector 3 is connected to a common rail 5 by a high pressure fuel pipe 14. Fuel is accumulated in the common rail 5 in a high pressure state such that when the solenoid valve 4 is opened, the fuel is fed through the fuel pipe 14 by an internal pressure of the common rail 5 and injected from the injector 3. The fuel is supplied to the common rail 5 from a fuel tank 7 by a pump 6 such that the internal pressure of the common rail 5 is maintained at a predetermined pressure.

The diesel engine 1 is further provided with an ECU 8 for controlling operation of the diesel engine 1. The ECU 8 is provided with a calculation unit 15 that calculates a fuel injection amount on the basis of operating conditions of the diesel engine 1, a storage unit 16 that stores information relating to fuel injection into the respective cylinders 2, and a memory 17 in which a reference rotational speed (described in this embodiment as 2000 rpm, for example) is set. Note that the value of the reference rotational speed may be set such that the time required to complete the fuel injection amount calculation is within the time required for rotation from a preset crank angle at which fuel injection amount calculation starts to a preset crank angle at which other calculation processing starts. This value may be set appropriately in each diesel engine on the basis of the number of cylinders in the engine, the processing speed of the calculation unit 15, the calculation content, and so on. An engine rotation sensor 9 for detecting crank angle and rotational speed of the diesel engine 1 and a drive circuit 10 are electrically connected to the ECU 8. The solenoid valve 4 is electrically connected to the drive circuit 10.

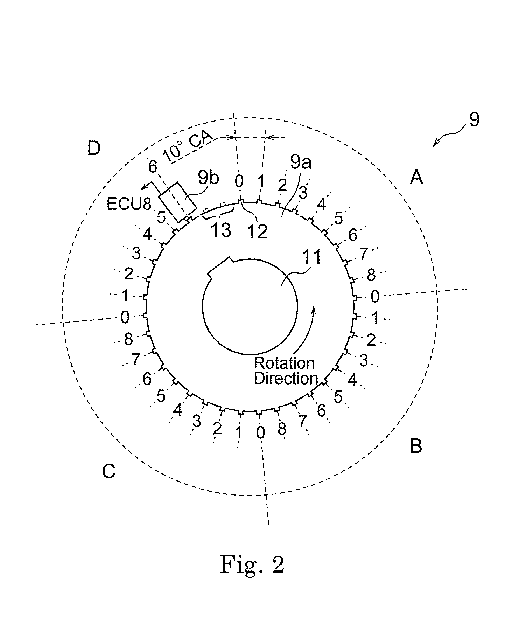

As shown in Fig. 2, the engine rotation sensor 9 includes a pulser 9a and a pickup 9b. The pulser 9a is disc-shaped, and a central portion thereof is coupled to a crankshaft 11 such that the pulser 9a rotates in conjunction with rotation of the crankshaft 11. Thirty-four teeth 12 are formed on an outer peripheral edge of the pulser 9a. The teeth 12 are provided in positions obtained by dividing the entire outer peripheral edge of the pulser 9a by thirty-six, and therefore tooth missing portions 13 exist in two tooth positions indicated by dotted lines. In other words, two teeth are missing. The teeth 12 are divided into four sections A to D at intervals of 90°, and numbers 0 to 8 are allocated respectively to the teeth 12 in the sections A to C. Only seven teeth exist in the section D including the tooth missing portions 13, and therefore numbers 0 to 6 are allocated respectively to the teeth 12 in the section D. The pickup 9b is a magnetic sensor disposed in a position facing the teeth 12 in order to output a pulse signal to the ECU 8 electrically connected thereto every time a tooth 12 approaches during rotation of the pulser 9a. The ECU 8 to which the pulse signals are transmitted calculates the rotational speed on the basis of an interval between the pulse signals. Further, the ECU 8 calculates the crank angle on the basis of the tooth missing portions 13, at which pulse signals are not detected, and the number of pulse signals detected after the tooth missing portions 13.

Next, operation of the fuel injection control apparatus according to this embodiment will be described.
The calculation unit 15 calculates the fuel injection amounts to be injected respectively into the eight cylinders 2 of the diesel engine 1 at a timing based on the crank angle. This timing may be set appropriately in accordance with the processing speed of the ECU 8. When calculation of the fuel injection amounts for the respective cylinders is complete, the ECU 8 issues injection reservations for fuel injection into the respective cylinders to the drive circuit 10. Calculation results obtained by the calculation unit 15 are stored in the storage unit 16, and the drive circuit 10 opens the solenoid valves 4 at timings based on the calculation results stored in the storage unit 16 such that fuel is injected into the respective cylinders through the injectors 3 on the basis of the calculation results stored in the storage unit 16.
Note that the fuel injection amount denotes not only a total amount of fuel injected into each cylinder. Depending on the operating conditions of the diesel engine 1, the fuel may be divided into a plurality of injections, such as a main injection and a post-injection, before being injected into the respective cylinders, and therefore the fuel injection amount also includes a number of divided injections, as well as timings and amounts of the divided injections.

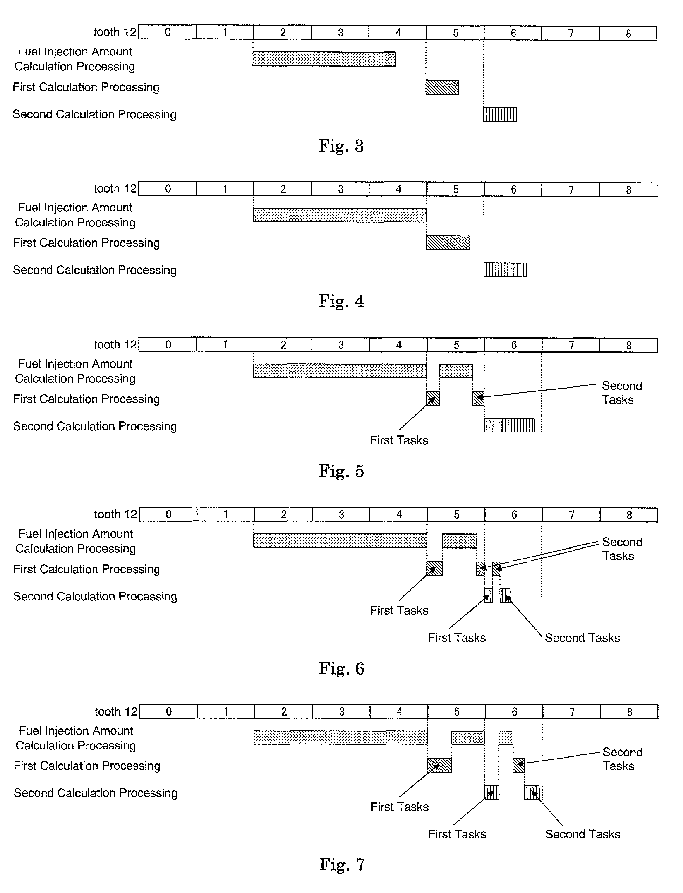

Next, the calculation processing executed by the calculation unit 15 will be described in detail.
The calculation unit 15 is set to start the fuel injection amount calculation processing when the pickup 9b detects the tooth 12 allocated the number 2 in each section of the pulser 9a. Fig. 3 shows a case in which the rotational speed of the diesel engine 1 is lower than the reference rotational speed of 2000 rpm. In this case, the rotational speed of the diesel engine is lower than the reference rotational speed, and therefore the fuel injection amount calculation processing is completed at a timing before the pickup 9b detects the tooth 12 allocated the number 5, at which other calculation processing to be described below is started. Next, from a point (to be referred to hereafter as a "first crank angle") where the pickup 9b detects the tooth 12 allocated the number 5, the calculation unit 15 performs first calculation processing included in calculation processing other than the fuel injection amount calculation processing, i.e., the other calculation processing. Next, from a point (to be referred to hereafter as a "second crank angle") where the pickup 9b detects the tooth 12 allocated the number 6, the calculation unit 15 performs second calculation included in calculation processing other than both the fuel injection amount calculation processing and the first calculation processing, i.e., the other calculation processing. In this case, temporal leeway exists between the fuel injection amount calculation processing, the first calculation processing, and the second calculation processing, and therefore the sequence of the calculation processing is not switched.

When the rotational speed of the diesel engine 1 increases, crank angle intervals remain identical but the time period thereof decreases. Therefore, when the rotational speed of the diesel engine 1 reaches the reference rotational speed of 2000 rpm, as shown in Fig. 4, the calculation unit 15 completes the fuel injection amount calculation processing at the first crank angle. In other words, the reference rotational speed according to this embodiment is set as an upper limit rotational speed of the diesel engine 1 at which the fuel injection amount calculation processing can be completed by the first crank angle. The calculation unit 15 performs the first calculation processing immediately after completing the fuel injection amount calculation processing, and then performs the second calculation processing at the second crank angle. Although there is no temporal leeway between the fuel injection amount calculation processing and the first calculation processing, the first calculation processing is started immediately after completion of the fuel injection amount calculation processing, and therefore likewise in this case, the calculation processing sequence of the fuel injection amount calculation processing, the first calculation processing, and the second calculation processing is not switched.
In the case described above, in which the rotational speed of the diesel engine 1 is equal to or lower than the reference rotational speed of 2000 rpm, the calculation processing sequence is not switched, and therefore the calculation unit 15 is set to perform the processing without taking interruption processing into consideration.

When the rotational speed of the diesel engine 1 rises above the reference rotational speed of 2000 rpm, the calculation unit 15 can no longer complete the fuel injection amount calculation processing by the first crank angle. In this case, the calculation unit 15 is set to interrupt the fuel injection amount calculation processing with the first calculation processing. In other words, the calculation processing sequence of the fuel injection amount calculation processing and the first calculation processing is switched.

As shown in Fig. 5, a plurality of tasks constituting the first calculation processing are divided into a group of tasks in which calculation must be performed at the first crank angle and a group of tasks requiring calculation results of the fuel injection amount calculation processing, wherein the tasks of the former group are set as first tasks and the tasks of the latter group are set as second tasks. Note that tasks in which calculation must be performed at the first crank angle but which also require the calculation results of the fuel injection amount calculation processing are classified as first tasks. When the first crank angle is reached midway through the fuel injection amount calculation processing, the fuel injection amount calculation processing is interrupted and the first tasks are performed. When the first tasks are completed, the remaining calculation processing of the fuel injection amount calculation processing is performed, whereupon the second tasks are performed. When it is possible to complete the second tasks by the second crank angle, the second calculation processing is started at the second crank angle. When the second tasks cannot be completed by the second crank angle, as shown in Fig. 6, a plurality of tasks constituting the second calculation processing are divided into a group of tasks in which calculation must be performed at the second crank angle and a group of tasks requiring the calculation results of the fuel injection amount calculation processing, wherein the tasks of the former group are set as first tasks and the tasks of the latter group are set as second tasks, similarly to the first calculation processing. At the second crank angle, the second tasks of the first calculation processing are interrupted and the first tasks of the second calculation processing are performed. Following completion of the first tasks, the remaining processing of the second tasks of the first calculation processing is performed. The second tasks of the second calculation processing are then performed.

As shown in Fig. 7, when the rotational speed of the diesel engine 1 rises further, it becomes impossible to complete the fuel injection amount calculation processing even at the second crank angle. In this case, the fuel injection amount calculation processing is interrupted at the second crank angle, and the first tasks of the second calculation processing are started. When the first tasks are complete, the remaining calculation processing of the fuel injection amount calculation processing is performed. Thereafter, the second tasks of the first calculation processing and then the second tasks of the second calculation processing are performed sequentially in order of the preset crank angles.

By dividing the processing into the first tasks, in which calculation must be started at a preset crank angle and which therefore have a higher order of precedence than fuel injection amount calculation, and the second tasks, in which calculation is performed following completion of fuel injection amount calculation and which therefore have a lower order of precedence than fuel injection amount calculation, even when the fuel injection amount calculation processing cannot be completed by the start point (the first crank angle) of the first calculation processing, the fuel injection amount calculation processing can be interrupted to perform the first tasks, the remaining calculation processing of the fuel injection amount calculation processing can be performed following completion of the first tasks, and then the second tasks requiring the fuel injection amount calculation results can be performed. As a result, the precision of both the fuel injection amount calculation processing and the other calculation processing can be improved.
Further, by providing the reference rotational speed, calculation content taking interruption processing into consideration, which has an increased calculation load, need not be performed when the rotational speed of the diesel engine 1 is lower than the reference rotational speed, and therefore an increase in calculation time can be prevented.

In this embodiment, the diesel engine 1 is a V type eight cylinder diesel engine, but the present invention is not limited thereto, and any diesel engine having a plurality of cylinders, for example a line type engine or a horizontally opposed engine, may be used instead.
Furthermore, the reference rotational speed of 2000 rpm is merely an example, and should be determined appropriately in accordance with the specifications of the diesel engine. Moreover, the start timing of the fuel injection amount calculation processing and the timings of the first crank angle and the second crank angle are merely examples, and may be modified appropriately in accordance with the specifications of the diesel engine.
Further, the first calculation processing and the second calculation processing are provided as the other calculation processing, but the other calculation processing is not limited thereto, and in a case where tasks in which processing is started on the basis of a predetermined crank angle and tasks using the fuel injection amount calculation results are performed as a single process and the tasks using the fuel injection amount calculation results include tasks that need not be based on the crank angle, three or more types of calculation processing may be set as the other processing.

Furthermore, in the other calculation processing, the second tasks are executed only after completion of the fuel injection amount calculation processing. However, a limit crank angle may be provided as a limit value at which calculation of the second tasks is started such that when the crank angle reaches the limit crank angle, the fuel injection amount calculation processing is interrupted in order to perform the second tasks. In this case, previous fuel injection amount calculation results are used to perform the second tasks, and therefore the precision of the other processing deteriorates. However, missed injection can be prevented. Moreover, likewise in this case, the calculation start time of the second tasks using the fuel injection amount calculation results can be retarded in comparison with the related art, thereby increasing the likelihood that the newest fuel injection amount calculation results will be used.
Further, the reference rotational speed is set as the upper limit rotational speed of the diesel engine 1 at which the fuel injection amount calculation processing can be completed by the first crank angle, but the reference rotational speed may be set at a lower rotational speed than the upper limit. In this case, instability can be prevented in the control relating to fuel injection when, due to an unforeseen calculation load or the like, fuel injection amount calculation is not completed by the first crank angle even though the rotational speed is no higher than the reference rotational speed.
Furthermore, instead of setting a reference rotational speed, calculation may be performed using the processing content employed in cases where interruption processing is likely to be necessary at all times.

## Claims

1. A fuel injection control apparatus for a diesel engine having a plurality of cylinders, which calculates fuel injection amounts for the respective cylinders on the basis of a crank angle,
the fuel injection control apparatus comprising a control apparatus having a calculation unit that performs:
fuel injection amount calculation processing; and
other calculation processing in which calculation is started from a preset crank angle following the start of the fuel injection amount calculation processing,
the other calculation processing including:
first tasks in which calculation must be started at the preset crank angle; and
second tasks requiring a calculation result of the fuel injection amount calculation processing,
wherein, when calculation of the fuel injection amounts is not completed by the preset crank angle, the calculation unit implements interruption control to interrupt the fuel injection amount calculation processing at the preset crank angle in order to perform the first tasks, perform remaining calculation processing of the fuel injection amount calculation processing following completion of the first tasks, and then perform the second tasks.

2. The fuel injection control apparatus according to claim 1, wherein a reference rotational speed, which is a rotational speed of the diesel engine at which the fuel injection amount calculation processing is completed by the preset crank angle, is set in the control apparatus, and
the calculation unit determines whether or not to implement the interruption control in accordance with whether or not the rotational speed of the diesel engine exceeds the reference rotational speed.

3. The fuel injection control apparatus according to claim 1 or 2, wherein the other calculation processing is constituted by a plurality of processes in which calculation is started from respectively different preset crank angles, and
the calculation unit performs calculation processing relating to the respective second tasks of the plurality of processes in order of the preset crank angles following completion of the fuel injection amount calculation processing.

4. The fuel injection control apparatus according to any one of claims 1 to 3, wherein a limit crank angle relating to the second tasks is set in advance in the control apparatus, and
when the fuel injection amount calculation processing is not completed by the limit crank angle, the calculation unit performs the calculation processing relating to the second tasks using a previously calculated fuel injection amount calculation result.
